Europäisches Patentamt

(19) European Patent Office

Office européen des brevets

(11) Publication number : **0 337 536 B1**

(12) **EUROPEAN PATENT SPECIFICATION**

(45) Date of publication of patent specification :
**19.11.92 Bulletin 92/47**

(21) Application number : **89200811.1**

(22) Date of filing : **30.03.89**

(51) Int. Cl.⁵ : **A23G 9/22, A23G 9/02**

(54) **Metal mould and ice confection.**

(30) Priority : **14.04.88 GB 8808835**

(43) Date of publication of application :
**18.10.89 Bulletin 89/42**

(45) Publication of the grant of the patent :
**19.11.92 Bulletin 92/47**

(84) Designated Contracting States :
**AT BE CH DE ES FR GB GR IT LI NL SE**

(56) References cited :
**EP-A- 0 132 412**
**FR-A- 1 106 160**
**GB-A- 884 724**
**GB-A- 892 051**
**GB-A- 898 088**
**US-A- 1 912 352**
**US-A- 1 965 292**
**US-A- 2 032 483**
**US-A- 2 521 995**

(73) Proprietor : **UNILEVER N.V.**
**Burgemeester s'Jacobplein 1 P.O. Box 760**
**NL-3000 DK Rotterdam (NL)**
㊸ **BE CH DE ES FR GR IT LI NL SE AT**
Proprietor : **UNILEVER PLC**
**Unilever House Blackfriars P.O. Box 68**
**London EC4P 4BQ (GB)**
㊸ **GB**

(72) Inventor : **Plater, Keith**
**5, Swallow Drive**
**Rushden Northants. NN10 9EG (GB)**

(74) Representative : **Roscoe, Brian Corrie et al**
**UNILEVER PLC Patents Division Colworth**
**House Sharnbrook**
**Bedford MK44 1LQ (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

In the art of shaping ice confections a vast number of metal moulds is known, each having one or more advantageous features, such as attractive appearance, acceptable volume and a fast freezing rate. However, optimising the one feature often results in the deterioration of another. As a result there is a continuous need for improved moulds and ice confections of improved shape.

A well-known and attractive shape for ice confections is a so-called tongue shape having generally elliptical cross-sections, which cross-sections have a relatively high larger to smaller width ratio. Moulds for manufacturing such ice confections are known from GB patent no. 898.088. An acceptable volume for the novelties ranges in practice from 70 to 90 cm³ and preferably from 75 to 85 cm³.

The inventor realized that the freezing rate may be considerably increased if the surface to volume ratio is at least 0.17 mm⁻¹ and the cross-sections have a larger to smaller width ratio of at least 2.4 without deteriorating the general aspect, the mechanical strength and the stick retaining properties.

The expressions "usable capacity" and "usable depth" relate to that part of the capacity and depth, respectively, of a mould that in practical use will be used while preventing splashing or spattering of the liquid for filling out of the mould. Usually the usable depth is about 2 cm less than the total depth of a mould. The usable capacity corresponds.

A shape which shows a particularly improved freezing rate and is particularly appealing to the customers is tapering from a wider open end towards a narrower bottom and having a larger width and a smaller width, of which the internal larger width tapers from the open end towards the bottom by not more than 6° down to ¼ of the usable depth of the mould.

A still more improved freezing rate and good stick retaining properties are obtained if the internal smaller width tapers from the open end towards the bottom by not more than 4° down to 1/4 of the usable depth of the mould.

In this specification and claims the larger and the smaller width refer to the longer and the shorter axis, respectively, of the cross-sectional ellipse of the ice confection or of the mould.

Confections cracking off the stick may be reduced to a minimum by arranging that the smaller width near the open end is at least 20 mm and preferably at least 22 mm. Preferred length dimensions of the confection can be obtained with moulds having an internal usable depth of at least 9 cm.

The invention also relates to ice confections made by using moulds of the above construction and having corresponding dimensional properties.

A preferred height for such confections ranges from 9 to 11 cm.

In this regard may be remarked that tapering moulds for freezing ice confections are known in many embodiments, examples thereof being disclosed in GB-A-884724 showing a fluted mould which is elliptical in cross-section near its open end. The inventor did not realize the importance of the shape, as evidenced by his statement on page 1 lines 70-72 that "the shape may be modified as required", without disclosing the requirements. GB-A-892051 shows two embodiments of tapering ice confections, the one not being elliptical and the other vaguely resembling an elliptical shape in cross-section, however, having a relatively low larger to smaller width ratio of about 1.65. EP-A-0 132 412 discloses moulds for shaping ice confections into several shapes, without describing or showing these shapes have elliptical cross-sections. The other features of this invention are not disclosed or suggested either.

The invention will be exemplified in the following description of a preferred embodiment of the invention, reference being had to the drawings.

Fig. 1 is a longitudinal section of a mould according to the invention;

Fig. 2 is a longitudinal section of the mould of Fig. 1 taken along the line II-II in Fig. 1;

Fig. 3 and Fig. 4 are cross-sectional views taken along the lines III-III and IV-IV in Fig. 1 respectively;

Fig. 5 is a top view of the mould of Fig. 1 and

Fig. 6 is a perspective view of an ice confection made in the mould of Figs. 1-5.

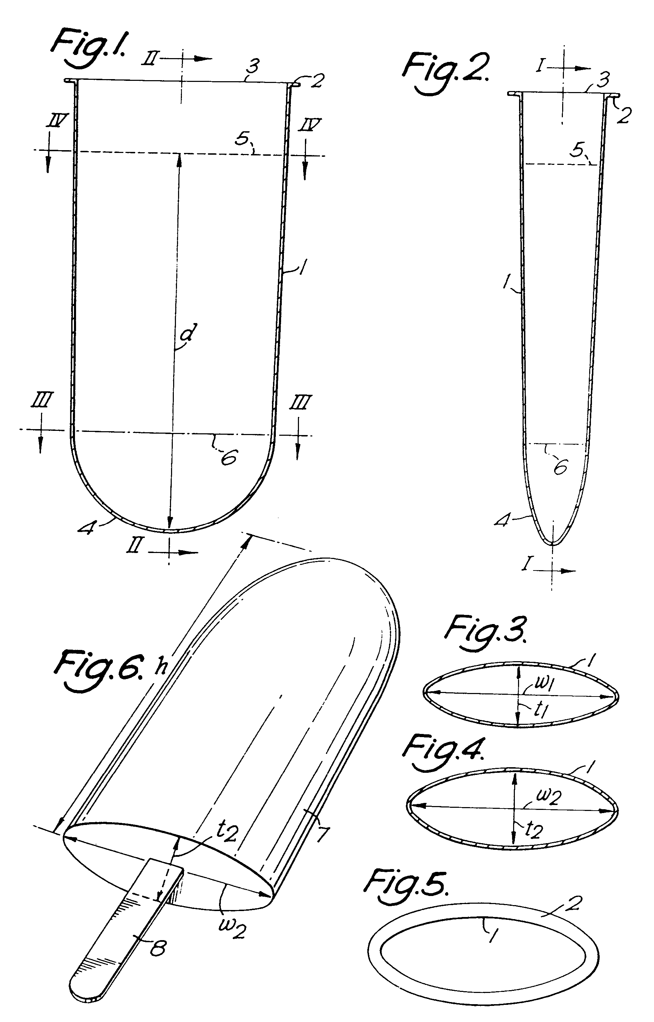

In Figs. 1 to 5 a metal mould for manufacturing ice lollies is shown in longitudinal section, cross section and in top view. The mould comprises a moulding pocket 1 to be filled with any fluid material to be frozen and a rim 2 for suspending it in an ice-making machine. Needless to remark, any different way of supporting the mould in an ice-making machine may be used.

The moulding pocket 1 is slightly tapering from the open end 3 towards the bottom 4. All dimensional features of the mould are relating to the usable part of said mould, i.e. the part below the usual filling level 5 indicated in Figures 1 and 2 by a broken line. The internal taper of the mould is about 2°50′ in the sectional view shown in Fig. 1 and about 4° in the section shown in Fig. 2. Of course, the rounded bottom portion 7, e.g. the lower quarter of the usable part of the mould, should be left out of consideration, i.e. below the dot and dash line 6. The elliptical shape of the cross sections is clearly to be seen in Figures 3 and 4, being taken at ¼ of the usable depth 6 and at the usual filling level 5, respectively. The ratio of the larger width w to the smaller width t of these cross sections should be at least 2.4.

The smaller width $t_2$ at the filling level 5, as indicated in Fig. 4 should be at least 20 and preferably at least 22 mm.

Similar requirements apply to the ice confection 7 which can be made in the above mould. This ice confection 7, as shown in perspective view in Fig. 6, has roughly a tongue-shape and is provided with a usual stick 8. The thickness $t_2$ at the thick end, where the stick 8 is inserted, should be at least 20 mm and preferably at least 22 mm.

Again, the width to thickness ratio w/t should be at least 2.4. The height h is ranging from 9 to 11 cm.

The ice confection is tapering from the thick end towards the tip and has a width tapering from the thick end towards the tip by not more than 6° up to 3/4 of the height of the confection and a thickness by not more than 4°. Preferred tapers are about 3° and about 4°, respectively.

## Claims

1. An ice confection having generally elliptical cross-sections , which cross-sections have a relatively high larger to smaller width ratio (w/t) characterized by a volume of from 70 to 90 cm$^3$, a surface to volume ratio of at least 0.17 mm$^{-1}$ and the cross sections having a larger to smaller width ratio (w/t) of at least 2.4.

2. An ice confection according to claim 1, wherein the volume ranges from 75 to 85 cm$^3$.

3. An ice confection according to claim 1 or 2, tapering from a thick end towards a tip and having a width (w) and a thickness (t), wherein the width (w) tapers from the thick and towards the tip by not more than 6° up to 3/4 of the height (h) of the confection and the thickness (t) by not more than 4°.

4. An ice confection according to any of claims 1 to 3, wherein the smaller width ($t_2$) at the thick end is at least 20 mm and preferably at least 22 mm.

5. An ice confection according to any of claims 1 to 4, wherein its height (h) is ranging from 9 to 11 cm.

6. A metal mould (1) for making a frozen confection having generally elliptical cross-sections, which cross-sections have a relatively high larger to smaller width ratio (w/t), characterized by a usable capacity from 70 to 90 cm$^3$, an internal surface to capacity ratio of at least 0.17 mm$^{-1}$ and the cross-sections having a larger to smaller width ratio (w/t) of at least 2.4.

7. A mould according to claim 6, wherein the usable capacity ranges from 75 to 85 cm$^3$.

8. A mould according to any of claim 6 or 7, tapering from a wider open end towards a narrower bottom end and having a larger width (w) and a smaller width (t), wherein the internal larger width (w) tapers from the open end towards the bottom by not more than 6° down to 1/4 of the usable depth (d) of the mould and the internal smaller width (t) by not more than 4°.

9. A mould according to any of claims 6 to 8, wherein the smaller width ($t_2$) near the open end is at least 20 mm and preferably at least 22 mm.

10. A mould according to any of claims 6 to 9, wherein the internal usable depth (d) of the mould is at least 9 cm.

## Patentansprüche

1. Speiseeisprodukt mit allgemein elliptischen Querschnitten, welche Querschnitte ein relativ hohes Längen- zu Breiten-Verhältnis (w/t) aufweisen, gekennzeichnet durch ein Volumen von 70 bis 90 cm$^3$ und ein Flächen- zu Volums-Verhältnis von zumindest 0,17 mm$^{-1}$, wobei die Querschnitte ein Längen- zu Breiten-Verhältnis (w/t) von zumindest 2,4 aufweisen.

2. Speiseeisprodukt nach Anspruch 1, wobei das Volumen im Bereich von 75 bis 85 cm$^3$ liegt.

3. Speiseeisprodukt nach Anspruch 1 oder 2, welches sich von einem dicken Ende zu einer Spitze hin verjüngt und eine Breite (w) und eine Dicke (t) aufweist, wobei sich die Breite (w) vom dicken Ende zur Spitze hin um nicht mehr als 6° bis zu 3/4 der Höhe (h) des Speiseeisproduktes und die Dicke (t) um nicht mehr als 4° verjüngt.

4. Speiseeisprodukt nach einem der Ansprüche 1 bis 3, wobei die kleinere Breite ($t_2$) am dicken Ende zumindest 20 mm und vorzugsweise zumindest 22 mm beträgt.

5. Speiseeisprodukt nach einem der Ansprüche 1 bis 4, wobei seine Höhe (h) im Bereich von 9 bis 11 cm liegt.

6. Metallform (1) zur Herstellung eines gefrorenen Speiseeisproduktes mit allgemein elliptischen Querschnitten, welche Querschnitte ein relativ hohes Längen- zu Breiten-Verhältnis (w/t) aufweisen, gekennzeichnet durch eine verwendbare Kapazität von 70 bis 90 cm$^3$ und ein Innenflächen- zu Kapazitäts-Verhältnis von zumindest 0,17 mm$^{-1}$, wobei die Querschnitte ein Längen- zu Breiten-Verhältnis (w/t) von zumindest 2,4 aufweisen.

**7.** Form nach Anspruch 6, wobei die verwendbare Kapazität im Bereich von 75 bis 85 cm$^3$ liegt.

**8.** Form nach einem der Ansprüche 6 oder 7, welche sich von einem breiteren offenen Ende zu einem engeren Bodenende hin verjüngt und eine größere Breite (w) und eine kleinere Breite (t) aufweist, wobei sich die innere größere Breite (w) vom offenen Ende zum Boden hin um nicht mehr als 6° bis zu etwa 1/4 der verwendbaren Tiefe (d) der Form und die innere kleinere Breite (t) um nicht mehr als 4° verjüngt.

**9.** Form nach einem der Ansprüche 6 bis 8, bei welcher die kleinere Breite ($t_2$) nahe dem offenen Ende zumindest 20 mm und vorzugsweise zumindest 22 mm beträgt.

**10.** Form nach einem der Ansprüche 6 bis 9, bei welcher die innere verwendbare Tiefe (d) der Form zumindest 9 cm beträgt.

## Revendications

**1.** Bâton de crème glacée présentant des sections droites de forme générale elliptique, sections droites dont le rapport entre la grande largeur et la petite largeur (w/t) est relativement élevé, bâton caractérisé par un volume allant de 70 à 90 cm$^3$, un rapport entre la surface et le volume d'au moins 0,17 mm$^{-1}$, et des sections droites dont le rapport entre la grande largeur et la petite largeur (w/t) vaut au moins 2,4.

**2.** Bâton de crème glacée selon la revendication 1, dans lequel le volume va de 75 à 85 cm$^3$.

**3.** Bâton de crème glacée selon la revendication 1 ou 2, s'amincissant depuis une extrémité épaisse vers une pointe et présentant une largeur (w) et une épaisseur (t), la largeur (w) allant en diminuant depuis la portion épaisse et vers la pointe, selon en angle non supérieur à 6° jusqu'au 3/4 de la hauteur (h) du bâton de crème glacée et la largeur (t) allant en diminuant selon un angle non supérieur à 4°.

**4.** Bâton de crème glacée selon l'une quelconque des revendications 1 à 3, dans lequel, à l'extrémité épaisse, la petite largeur ($t_2$) est d'au moins 20 mm et de préférence au moins 22 mm.

**5.** Bâton de crème glacée selon l'une quelconque des revendications 1 à 4, dans lequel sa hauteur (h) va de 9 à 11 cm.

**6.** Moule métallique (1), pour fabriquer un bâton de crème glacée présentant des sections droites de forme générale elliptique, sections droites dont le rapport entre la grande largeur et la petite largeur (w/t) est relativement élevé, caractérisé par une capacité utile allant de 70 à 90 cm$^3$, par un rapport entre la surface intérieure et la capacité d'au moins 0,17 mm$^{-1}$ et par les sections droites dont le rapport entre la grande largeur et la petite largeur (w/t) vaut au moins 2,4.

**7.** Moule selon la revendication 6, dans lequel la capacité utile va de 75 à 85 cm$^3$.

**8.** Moule selon l'une quelconque des revendications 6 ou 7, allant en s'amincissant, depuis une extrémité ouverte plus large, vers une extrémité inférieure plus étroite, et présentant une grande largeur (W) et une petite largeur (t), la grande largeur intérieure (w) allant en diminuant depuis l'extrémité ouverte vers l'extrémité inférieure selon un angle non supérieur à 6° jusqu'au 1/4 de la profondeur utile (d) du moule et la petite largeur intérieure (t) allant en diminuant selon un angle non supérieur à 4°.

**9.** Moule selon l'une quelconque des revendications 6 à 8, dans lequel la petite largeur ($t_2$) près de l'extrémité ouverte vaut au moins 20 mm et de préférence au moins 22 mm.

**10.** Moule selon l'une quelconque des revendications 6 à 9, dans lequel la profondeur utile intérieure (d) du moule vaut au moins 9 cm.

Fig.1.

Fig.2.

Fig.6.

Fig.3.

Fig.4.

Fig.5.